# EUROPEAN PATENT APPLICATION

(11) **EP 4 753 113 A1**
(43) Date of publication of application: **03.06.2026**
(21) Application number: 25180849.9
(22) Date of filing: 04.06.2025
(51) Int. Cl.: H02K 1/18

(54) **AXIAL FLUX MOTOR STATOR STRUCTURE**

(30) Priority: 27.11.2024 CN 202411716977
(71) Applicant: Delta Electronics, Inc., Taoyuan City 333 (TW)
(72) Inventor: HUANG, Hsin-Yi, 333 Taoyuan City (TW); HSU, Tzu-Ting, 333 Taoyuan City (TW); SHEU, Hong-Cheng, 333 Taoyuan City (TW)
(74) Representative: Porta & Consulenti Associati S.p.A.

(57) **Abstract**

An axial flux motor stator structure (100) includes an outer ring-shaped bracket (110), an inner ring-shaped bracket (120), a stator core (130), an upper winding assembly, a lower winding assembly, an upper thin plate (160) and a lower thin plate (170). The stator core is between the inner ring-shaped bracket and the outer ring-shaped bracket and has plural upper and lower stator slots. The upper winding assembly (140) and the lower winding assembly (150) pass through the upper and lower stator slots respectively. Each of the upper thin plate and the lower thin plate includes an outer axial structure, an inner axial structure and a radial structure. The radial structure is between the upper and the lower winding assemblies.

## Description

### BACKGROUND

### Field of Invention

The present disclosure relates to an axial flux motor stator structure.

### Description of Related Art

Under the same size constraints, performance of an axial flux motor is superior to that of a radial flux motor. Since the geometric relationship between the stator and rotor of the radial flux motor is a concentric cylindrical relationship, while the geometric relationship between the stator and rotor of the axial flux motor is a parallel disk relationship, the axial flux motor has increasingly higher structural strength requirement compared to radial flux motor such that the development of the axial flux motor is limited.

Motor winding may be divided into concentrated winding and distributed winding. The performance of distributed winding is superior to that of concentrated winding due to magnetic field distribution. However, overlapping winding method of distributed winding causes copper wires to occupy more spaces, leaving insufficient structural space for structural fixation and heat dissipation, as a result, products in the current market mainly use concentrated winding. Additionally, the distributed winding is hard to implement due to the increasing fixation requirement for the stator with heavier mass positioned between two rotors.

### SUMMARY

According to embodiments of the present disclosure, An axial flux motor stator structure includes an outer ring-shaped bracket, an inner ring-shaped bracket, a stator core, an upper winding assembly, an lower winding assembly, an upper thin plate and a lower thin plate. The stator core is located between the inner ring-shaped bracket and the outer ring-shaped bracket and has a plurality of upper stator slots and lower stator slots. The upper winding assembly passes through the upper stator slots, the lower winding assembly passes through the lower stator slots, and the upper thin plate and the lower thin plate are located between the inner ring-shaped bracket and the outer ring-shaped bracket. Each of the upper thin plate and the lower thin plate includes an outer axial structure, an inner axial structure and a radial structure, and two ends of the radial structure connect the outer axial structure and the inner axial structure respectively. The radial structure is located between the upper winding assembly and the lower winding assembly, the outer axial structure is located between the outer ring-shaped bracket and the stator core, and the inner axial structure is located between the inner ring-shaped bracket and the stator core.

In some embodiments, the radial structure of the upper thin plate and the lower thin plate include a plurality of reinforcing ribs. The reinforcing ribs are in a radial arrangement, and every two adjacent reinforcing ribs form a plurality of empty spaces, and the stator core passes through the empty spaces.

In some embodiments, each of the upper thin plate and the lower thin plate further include an outer fixed part, an inner fixed part and a plurality of fixed components. The outer fixed part is located between the outer axial structure and the reinforcing ribs, and has a plurality of outer positioning holes. The inner fixed part is located between the inner axial structure and the reinforcing ribs, and has a plurality of outer positioning holes. A portion of the fixed components pass through one of the outer positioning holes of the upper thin plate and one of the outer positioning holes of the lower thin plate, and another portion of the fixed components pass through one of the inner positioning holes of the upper thin plate and one of the inner positioning holes of the lower thin plate.

In some embodiments, the inner positioning holes of the upper thin plate respectively align the inner positioning holes of the lower thin plate in a vertical direction, and the outer positioning holes of the upper thin plate respectively align the outer positioning holes of the lower thin plate in the vertical direction.

In some embodiments, an inner edge of the outer fixed part has a plurality of outer contact parts, an outer edge of the inner fixed part has a plurality of inner contact parts, and the inner contact parts and the outer contact parts respectively contact an inner side and an outer side of the stator core.

In some embodiments, each of the outer axial structure and the inner axial structure comprises a plurality of vertical sheets, wherein height of each vertical sheet are different from each other, and every two adjacent vertical sheets have a tangent line between them.

In some embodiments, a top edge of the outer axial structure and a top edge of the inner axial structure of the upper thin plate are concave and convex, and respectively configured to fit into a top edge of an inner side of the outer ring-shaped bracket and a top edge of an outer side of the inner ring-shaped bracket. A bottom edge of the outer axial structure and a bottom edge of the inner axial structure of the lower thin plate are concave and convex, and respectively configured to fit into a bottom edge of an inner side of the outer ring-shaped bracket and a bottom edge of an outer side of the inner ring-shaped bracket.

In some embodiments, the outer axial structure of the upper thin plate and the outer axial structure of the lower thin plate extend to opposite directions from each other. The inner axial structure of the upper thin plate and the inner axial structure of the lower thin plate extend to opposite directions from each other.

In some embodiments, the upper winding assembly and the lower winding assembly respectively pass through the upper stator slots and the lower stator slots by distributed winding.

In some embodiments, materials of the upper thin plate and the lower thin plate are metals or carbon fiber with graphene coating layer on surface.

According to embodiments of the present disclosure, an axial flux motor stator structure includes an outer ring-shaped bracket, an inner ring-shaped bracket, a stator core, an upper winding assembly, an lower winding assembly, an upper thin plate and a lower thin plate. The stator core is located between the inner ring-shaped bracket and the outer ring-shaped bracket and has a plurality of upper stator slots and lower stator slots. the upper winding assembly passes through the upper stator slots, the lower winding assembly passes through the lower stator slots. The upper winding assembly and the lower winding assembly respectively pass through the upper stator slots and the lower stator slots by distributed winding, and an upper thin plate and a lower thin plate located between the inner ring-shaped bracket and the outer ring-shaped bracket. Each of the upper thin plate and the lower thin plate includes an outer axial structure, an inner axial structure and a radial structure, and two ends of the radial structure connect the outer axial structure and the inner axial structure respectively. The radial structure comprises a plurality of reinforcing ribs which are in a radial arrangement, every two adjacent reinforcing ribs form a plurality of empty spaces, and the stator core passes through the empty spaces.

In some embodiments, each of the upper thin plate and the lower thin plate further includes an outer fixed part, an inner fixed part and a plurality of fixed components. The outer fixed part is located between the outer axial structure and the reinforcing ribs, and has a plurality of outer positioning holes. The inner fixed part is located between the inner axial structure and the reinforcing ribs, and has a plurality of outer positioning holes. A portion of the fixed components pass through one of the outer positioning holes of the upper thin plate and one of the outer positioning holes of the lower thin plate, and another portion of the fixed components pass through one of the inner positioning holes of the upper thin plate and one of the inner positioning holes of the lower thin plate.

In some embodiments, the inner positioning holes of the upper thin plate respectively align the inner positioning holes of the lower thin plate in a vertical direction, and the outer positioning holes of the upper thin plate respectively align the outer positioning holes of the lower thin plate in the vertical direction.

In some embodiments, each of the outer axial structure and the inner axial structure comprises a plurality of vertical sheets, wherein height of each vertical sheet are different from each other, and every two adjacent vertical sheets have a tangent line between them.

In some embodiments, the outer axial structure of the upper thin plate and the outer axial structure of the lower thin plate extend to opposite directions from each other. The inner axial structure of the upper thin plate and the inner axial structure of the lower thin plate extend to opposite directions from each other.

In embodiments of the present disclosure, since the axial flux motor stator structure has the upper thin plate and the lower thin plate, force of magnetic attraction subjected to the stator can be distributed evenly across multiple points, and the upper thin plate and the lower thin plate are fixed in the stator core more stably by the radial structure. Therefore, the outer axial structure is located between the inner ring-shaped bracket and the stator core that can further strengthen rigidity of the axial flux motor stator structure.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
Fig. 1 is a perspective view of an axial flux motor stator structure according to one embodiment of the present disclosure.
Fig. 2 is an exploded view of the axial flux motor stator structure of Fig. 1.
Fig. 3 is a cross-sectional view along line 3-3 of a stator core, an upper thin plate and a lower thin plate of the axial flux motor stator structure of Fig. 1.
Fig. 4 is a cross-sectional view of the upper thin plate and the lower thin plate of Fig. 3 without the stator core.
Fig. 5 is a cross-sectional view along line 5-5 of the axial flux motor stator structure of Fig. 1 without the stator core, an upper winding assembly and a lower winding assembly.
Fig. 6 is a perspective view of combination of the stator core, the upper winding assembly and the lower winding assembly of Fig. 1.
Fig. 7 is a local cross-sectional view of the upper thin plate and the lower thin plate according to one embodiment of the present disclosure.
Fig. 8 is a perspective view of the axial flux motor stator structure of Fig. 1 applied to an axial flux motor.

### DETAILED DESCRIPTION

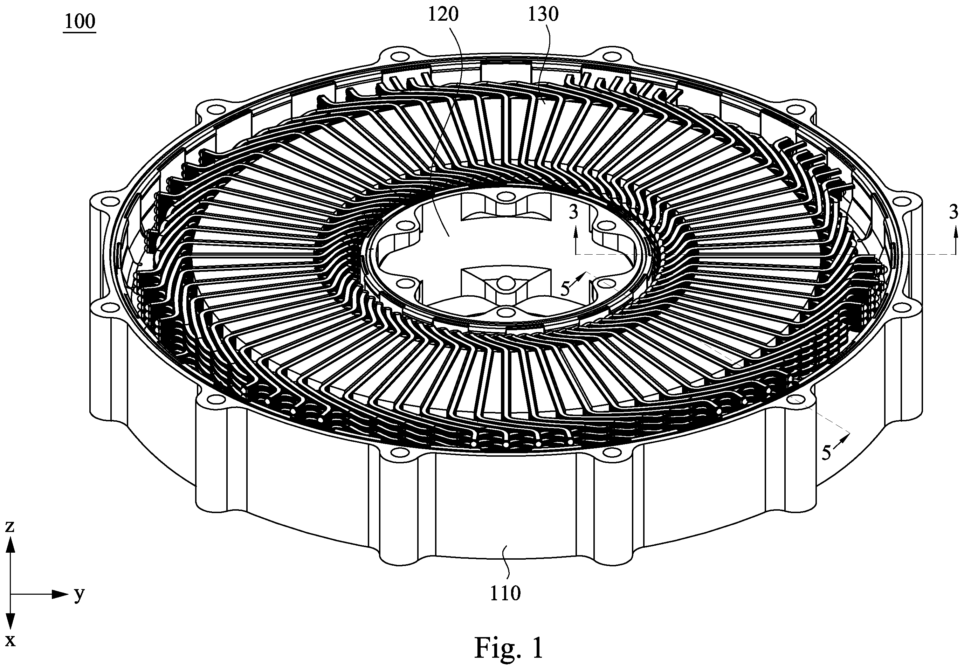

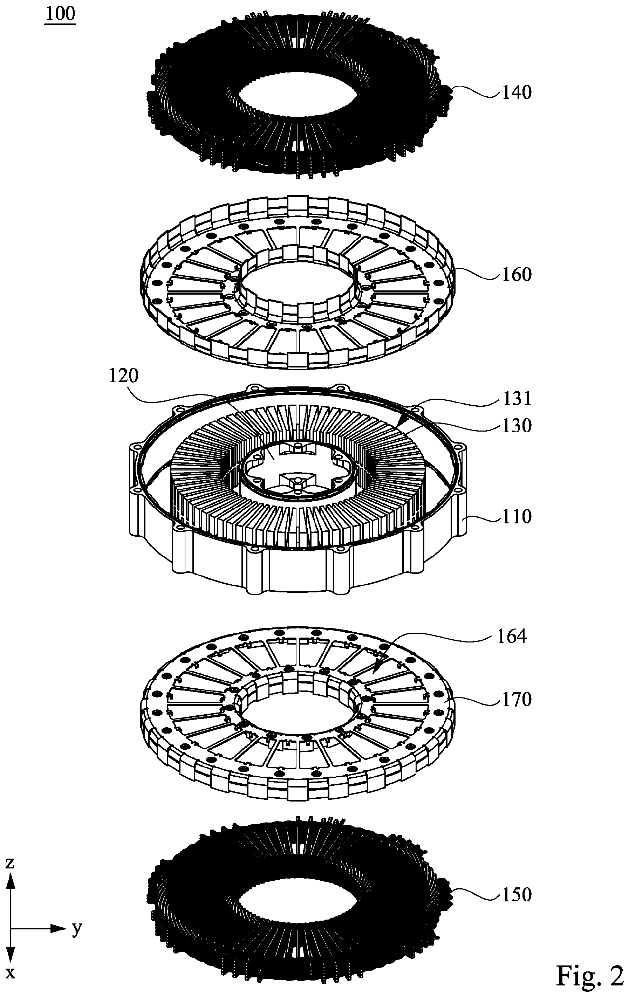

As shown in Fig. 1 and Fig. 2, an axial flux motor structure100 includes an outer ring-shaped bracket 110, an inner ring-shaped bracket 120, a stator core 130, an upper winding assembly 140, a lower winding assembly 150, an upper thin plate 160 and a lower thin plate 170. The stator core 130 is located between the inner ring-shaped bracket 120 and the outer ring-shaped bracket 110. During assembly, the upper thin plate 160 and the upper winding assembly 140 may be engaged with the stator core 130 from above z direction as shown in the drawing, and the lower thin plate 170 and the lower winding assembly 150 may be engaged with the stator core 130 from below. The upper thin plate 160 and the lower thin plate 170 are located between the inner ring-shaped bracket 120 and the outer ring-shaped bracket 110. In the description below, the structure and connections between each component described above will be explained in detail.

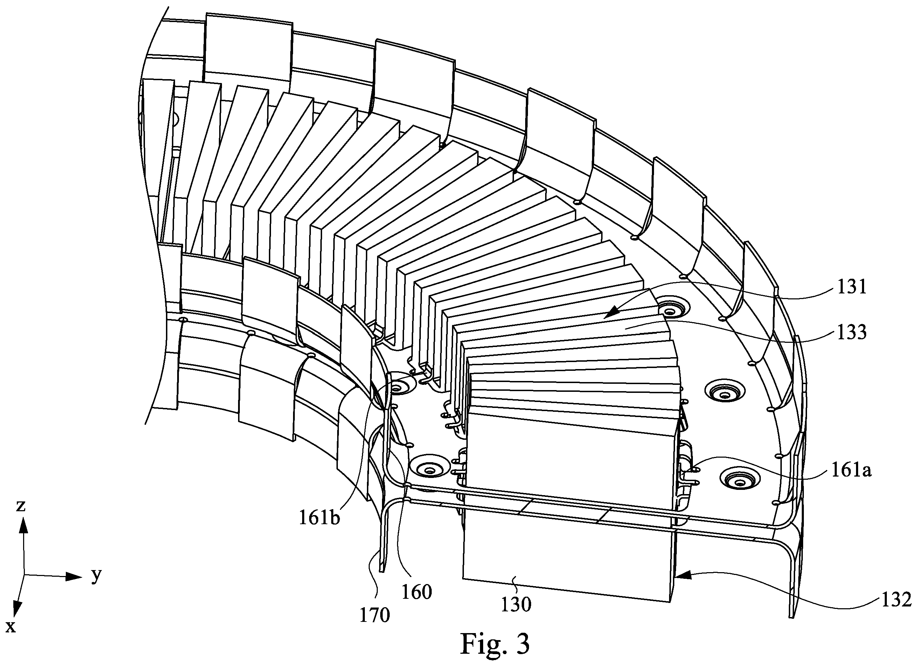

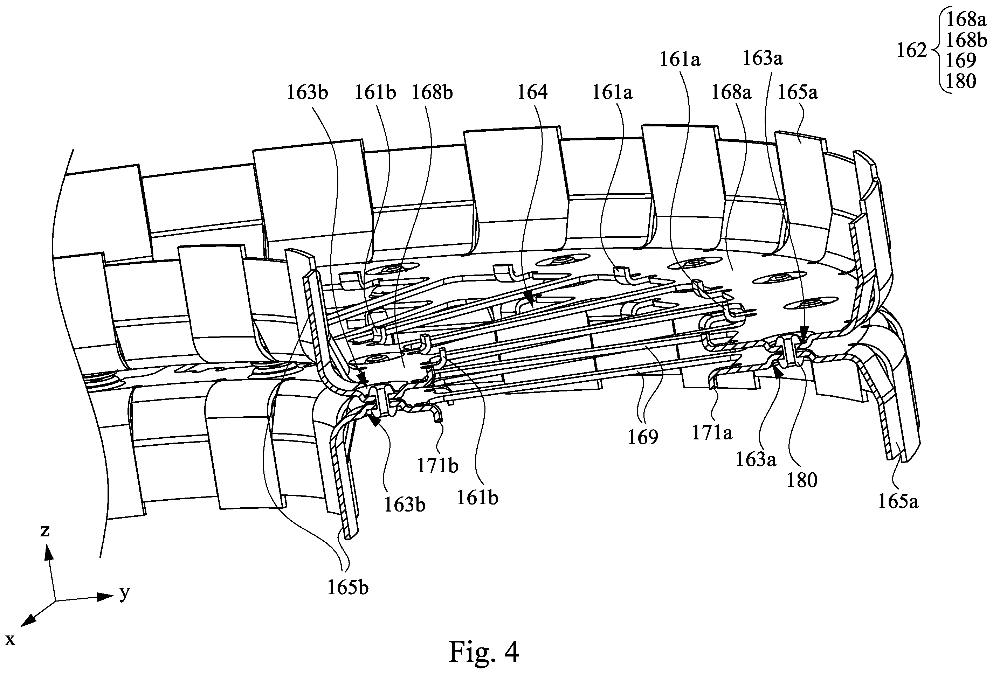

As shown in Fig. 3 and Fig. 4, in this embodiment, the stator core 130 has plural upper stator slots 131 and lower stator slots 132. Each of the upper stator slots 131 and the lower stator slots 132 may be defined by two adjacent stator sheets 133. Two groups of stator sheets are multi-layer stacked structure, and the upper stator slots 131 and the lower stator slots 132 are in a radial arrangement.

In this embodiment, each of the upper thin plate 160 and the lower thin plate 170 includes an outer axial structure 165a, an inner axial structure 165b and a radial structure 162. Two ends of the radial structure 162 are respectively connected the outer axial structure 165a and the inner axial structure 165b. Additionally, the radial structure 162 includes plural reinforcing ribs 169. The reinforcing ribs 169 are in a radial arrangement, and each of them extends along the radial direction. Every two adjacent reinforcing ribs 169 form plural empty spaces 164 and the stator core 130 can pass through the empty spaces 164. The reinforcing ribs 169 of the radial structure 162 are arranged evenly such that force is distributed evenly across multiple points on the reinforcing ribs 169 after the upper thin plate 160 and the lower thin plate 170 are subjected to force, and the outer axial structure 165a and the inner axial structure 165b are respectively cross-fixed and constrained with the radial structure from each other to achieve to reinforce the structural rigidity of the axial flux motor stator structure 100 (see Fig. 1). The empty spaces 164 can accommodated one to multiple groups of the stator sheets 133 according to the magnetic attraction of the stator core 130, but the present disclosure is not limited thereto. By the design above, the radial structure 162 can fix the upper thin plate 160 and the lower thin plate 170 in the stator core 130 more stably.

Additionally, the radial structure 162 further includes an outer fixed part 168a, an inner fixed part 168b and plural fixed components 180. The outer part 168a is located between the outer axial structure 165a and the reinforcing ribs 169 and has plural outer positioning holes 163a. The inner part 168b is located between the inner axial structure 165b and the reinforcing ribs 169 and has plural inner positioning holes 163b. The inner positioning holes 163b of the upper thin plate 160 respectively align the inner positioning holes 163b of the lower thin plate 170 in a vertical direction, such as z direction in the drawing or an axial direction. Each of some fixed components 180 passes through one of the outer positioning holes 163a of the upper thin plate 160 and one of the outer positioning holes 163a of the lower thin plate 170, and each of another some fixed components 180 passes through one of the inner positioning holes 163b of the upper thin plate 160 and one of the inner positioning holes 163b of the lower thin plate 170 to fix the stator core 130 between the upper thin plate 160 and the lower thin plate 170 for reinforcing the structural rigidity of the axial flux motor stator structure 100.

In various embodiments, an inner edge of the outer fixed part 168a of the upper thin plate 160 has plural outer contact parts 161a and an inner edge of the outer fixed part 168a of the lower thin plate 170 has plural outer contact parts 171a (see Fig. 4). An outer edge of the inner fixed part 168b of the upper thin plate 160 has plural inner contact parts 161b and an outer edge of the inner fixed part 168b of the lower thin plate 170 has plural inner contact parts 171b (see Fig. 4). The inner contact part 161b, 171b and the outer contact part 161a, 171a can be hook-shaped. For example, each of the inner contact part 161b, 171b and the outer contact part 161a, 171a can includes a radial part and an axial part, and the axial part can abut against the stator core 130.

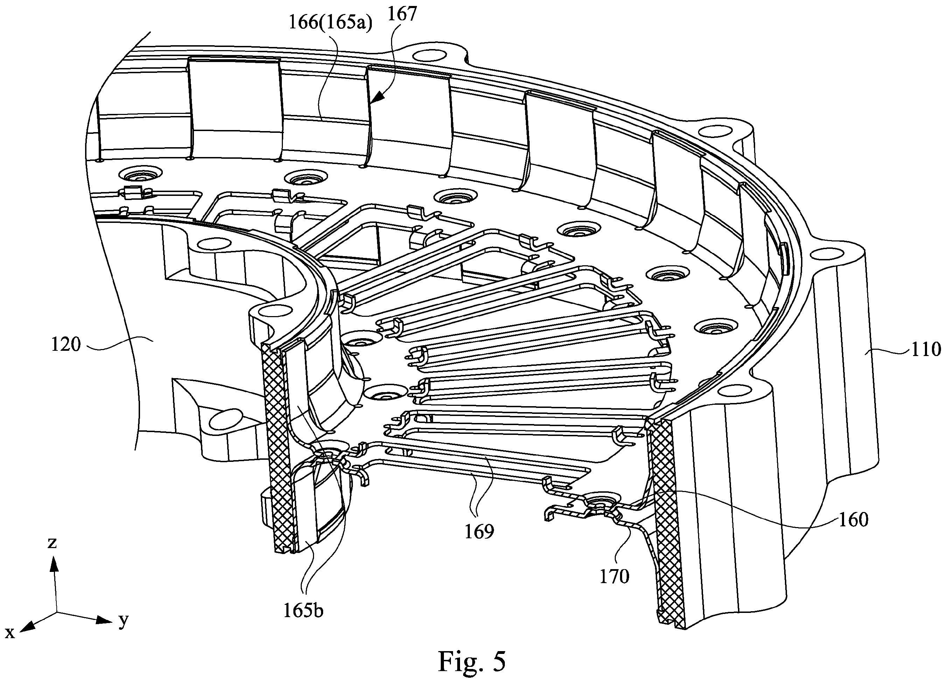

As shown in Fig. 5, the stator core 130, the upper winding assembly 140 and the lower winding assembly 150 are omitted from the axial flux motor stator 100. In some embodiments, the upper thin plate 160 and the lower thin plate 170 are located between the inner ring-shaped bracket 120 and the outer ring-shaped bracket 110. The outer axial structure 165a of the upper thin plate 160 and the outer axial structure 165a of the lower thin plate 170 extend to opposite directions from each other. For example, the outer axial structure 165a of the upper thin plate 160 extends to above along z axis, and the outer axial structure 165a of the lower thin plate 170 extends to below along z axis. Similarly, the inner axial structure 165b of the upper thin plate 160 and the inner axial structure 165b of the lower thin plate 170 extend to opposite directions from each other, for example, the inner axial structure 165b of the upper thin plate 160 extends to above along z axis, and the inner axial structure 165b of the lower thin plate 170 extends to below along z axis.

In this embodiment, the outer axial structure 165a and the inner axial structure 165b of each of the upper thin plate 160 and lower thin plate 170 include plural vertical sheets 166. The height of adjacent vertical sheets 166 are different from each other, there is a tangent line 167 between two adjacent vertical sheets 166. the outer axial structure 165a and the inner axial structure 165b have flexibility by the tangent line 167, and the vertical sheets 166 is configured to provide flexible regulated space and engage with tightly when the upper thin plate 160 and the lower thin plate 170 engage with the outer ring-shaped bracket 110 and the inner ring-shaped bracket 120.

**In** this embodiment, a top edge of the outer axial structure 165a of the upper thin plate 160 is concave and convex, and configured to a top edge of an inner side of the outer ring-shaped bracket 110. A top edge of the inner axial structure 165b of the upper thin plate 160 is concave and convex, and configured to engage with a top edge of an outer side of the inner ring-shaped bracket 120. A bottom edge of the outer axial structure 165a of the lower thin plate 170 is concave and convex, and configured to engage with a bottom edge of an inner side of the outer ring-shaped bracket 110. A bottom edge of the inner axial structure 165b of the lower thin plate 170 is concave and convex, and configured to engage with a bottom edge of an outer side of the inner ring-shaped bracket 120. When the stator core 130 is subjected to force, the force is distributed and transmitted evenly to the inner ring-shaped bracket 120 and the outer ring-shaped bracket 110 to protect the stator core 130 from damaged by the configuration, of which the inner axial structure 165b and the outer axial structure 165a respectively engage with the inner ring-shaped bracket 120 and the outer ring-shaped bracket 110.

As shown in Fig. 3 and Fig. 5, after assembly, the outer axial structures 165a of the upper thin plate 160 and the lower thin plate 170 are located between the outer ring-shaped bracket 110 and the stator core 130, and the inner axial structures 165b of the upper thin plate 160 and the lower thin plate 170 are located between the inner ring-shaped bracket 120 and the stator core 130.

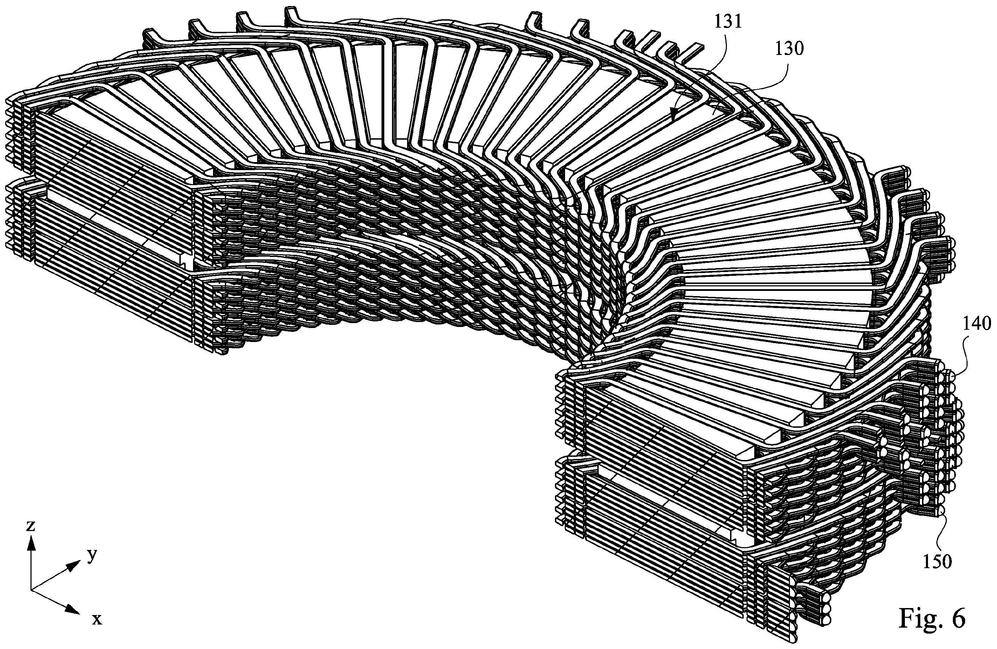

As shown in Fig. 6, the upper winding assembly 140 passes through the upper stator slots 131 and the lower winding assembly 150 passes through the lower stator slots 132 (see Fig. 3). In this embodiment, the upper winding assembly 140 and the lower winding assembly 150 are distributed winding such that the upper winding assembly 140 and the lower winding assembly 150 respectively pass through the upper stator slots 131 and the lower stator slots 132. Distributed winding assembly is overlapped winding method, and has superior magnetic properties compared to concentrated winding assembly thereby further enhancing motor performance. After assembling the upper thin plate 160 and the lower thin plate 170 in Fig. 5 and the stator core 130, the upper winding assembly 140 and the lower winding assembly 150 in Fig. 6, the radial structure 162 of the upper thin plate 160 and the lower thin plate 170 are located between the upper winding assembly 140 and the lower winding assembly 150.

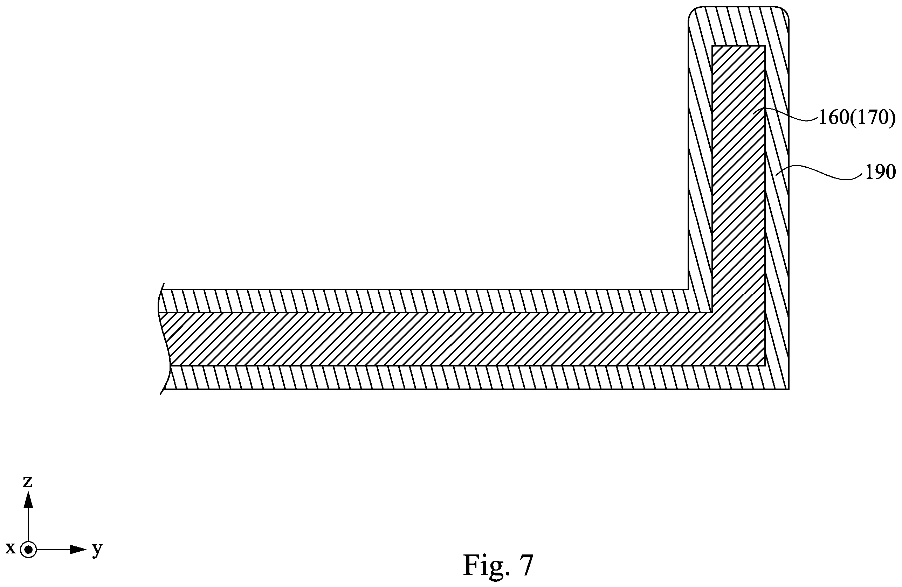

As shown in Fig. 7, materials of the upper thin plate 160 and the lower thin plate 170 can be carbon fiber with graphene coating layer on surface. Therefore, the surface of the upper thin plate 160 and the lower thin plate 170 are subjected to surface treatment with high conductive materials, and heat is transferred outward (such as the outer ring-shaped bracket 110 in Fig. 5) by the structure of the upper thin plate 160 and the lower thin plate 170 thereby further improving the heat dissipation performance of the axial flux motor stator structure 100 (see Fig. 1). In other embodiment, materials of the upper thin plate 160 and the lower thin plate 170 can be metals without graphene coating layer, and thus metal materials still possess effect of thermal conductivity.

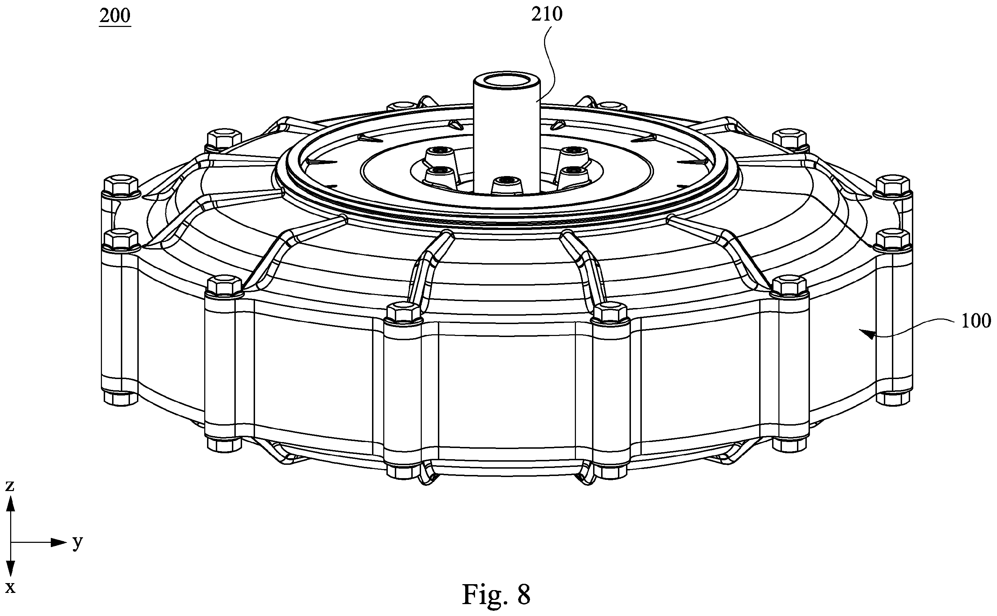

As shown in Fig. 1 and Fig. 8, a rotor 210 can be disposed above and below the axial flux motor stator structure 100 to implement an application of an axial flux motor 200. The axial flux motor 200 that has the axial flux motor stator structure 100 as described previously can meet high structural strength requirement and improve the heat dissipation situation of the distributed winding assembly.

## Claims

1. An axial flux motor stator structure (100), comprising:
an outer ring-shaped bracket (110);
an inner ring-shaped bracket (120);
a stator core (130) located between the inner ring-shaped bracket (120) and the outer ring-shaped bracket (110) and having a plurality of upper stator slots (131) and lower stator slots (132);
an upper winding assembly (140) passing through the upper stator slots (131);
a lower winding assembly (150) passing through the lower stator slots (132); and
an upper thin plate (160) and a lower thin plate (170) located between the inner ring-shaped bracket (120) and the outer ring-shaped bracket (110),
wherein each of the upper thin plate (160) and the lower thin plate (170) comprises an outer axial structure (165a), an inner axial structure (165b) and a radial structure (162), and two ends of the radial structure (162) connect the outer axial structure (165a) and the inner axial structure (165b) respectively, and
wherein the radial structure (162) is located between the upper winding assembly (140) and the lower winding assembly (150), the outer axial structure (165a) is located between the outer ring-shaped bracket (110) and the stator core (130), and the inner axial structure (165b) is located between the inner ring-shaped bracket (120) and the stator core (130).

2. The axial flux motor stator structure (100) of claim 1, wherein the radial structure (162) comprises:
a plurality of reinforcing ribs (169) which are in a radial arrangement, wherein every two adjacent reinforcing ribs (169) form a plurality of empty spaces (164), and the stator core (130) passes through the empty spaces (164).

3. The axial flux motor stator structure (100) of any one of claims 1-2, wherein each of the upper thin plate (160) and the lower thin plate (170) further comprises:
an outer fixed part (168a) located between the outer axial structure (165a) and the reinforcing ribs (169), and having a plurality of outer positioning holes (163a);
an inner fixed part (168b) located between the inner axial structure (165b) and the reinforcing ribs (169), and having a plurality of inner positioning holes (163b); and
a plurality of fixed components (180), wherein a portion of the fixed components (180) pass through one of the outer positioning holes (163a) of the upper thin plate (160) and one of the outer positioning holes (163a) of the lower thin plate (170), and another portion of the fixed components (180) pass through one of the inner positioning holes (163b) of the upper thin plate (160) and one of the inner positioning holes (163b) of the lower thin plate (170).

4. The axial flux motor stator structure (100) of claim 3, wherein the inner positioning holes (163b) of the upper thin plate (160) respectively align the inner positioning holes (163b) of the lower thin plate (170) in a vertical direction, and the outer positioning holes (163a) of the upper thin plate (160) respectively align the outer positioning holes (163a) of the lower thin plate (170) in the vertical direction.

5. The axial flux motor stator structure (100) of claim 3, wherein an inner edge of the outer fixed part (168a) has a plurality of outer contact parts (161a, 171a), an outer edge of the inner fixed part (168b) has a plurality of inner contact parts (161b, 171b), and the inner contact parts (161b, 171b) and the outer contact parts (161a, 171a) respectively contact an inner side and an outer side of the stator core (130).

6. The axial flux motor stator structure (100) of claim 1, wherein each of the outer axial structure (165a) and the inner axial structure (165b) comprises a plurality of vertical sheets (166), wherein height of each vertical sheet (166) are different from each other, and every two adjacent vertical sheets (166) have a tangent line (167) between them.

7. The axial flux motor stator structure (100) of claim 1, wherein a top edge of the outer axial structure (165a) and a top edge of the inner axial structure (165b) of the upper thin plate (160) are concave and convex, and respectively configured to engage with a top edge of an inner side of the outer ring-shaped bracket (110) and a top edge of an outer side of the inner ring-shaped bracket (120), and
wherein a bottom edge of the outer axial structure (165a) and a bottom edge of the inner axial structure (165b) of the lower thin plate (160) are concave and convex, and respectively configured to engage with a bottom edge of an inner side of the outer ring-shaped bracket (110) and a bottom edge of an outer side of the inner ring-shaped bracket (120).

8. The axial flux motor stator structure (100) of claim 1, wherein the outer axial structure (165a) of the upper thin plate (160) and the outer axial structure (165a) of the lower thin plate (170) extend to opposite directions from each other; and
wherein the inner axial structure (165b) of the upper thin plate (160) and the outer axial structure (165a) of the lower thin plate (170) extend to opposite directions from each other.

9. The axial flux motor stator structure (100) of claim 1, wherein the upper winding assembly (140) and the lower winding assembly (150) respectively pass through the upper stator slots (131) and the lower stator slots (132) by distributed winding.

10. The axial flux motor stator structure (100) of claim 1, wherein materials of the upper thin plate (160) and the lower thin plate (170) are metals or carbon fiber with graphene coating layer on surface.
